# EUROPEAN PATENT APPLICATION

(11) **EP 3 153 875 A1**
(43) Date of publication of application: **12.04.2017**
(21) Application number: 15188561.3
(22) Date of filing: 06.10.2015
(51) Int. Cl.: G01S 7/00, G01S 7/02, G01S 13/34, G01S 13/87, G01S 13/93

(54) **A MODULAR VEHICLE RADAR**

(71) Applicant: Autoliv Development AB, 447 83 Vårgårda (SE)
(72) Inventor: Maisel, Jürgen, 85567 Grafing bei München (DE)
(74) Representative: Sandstedt, Jonas Sven James

(57) **Abstract**

The present disclosure relates to a vehicle radar system (3) comprising at least one group of at least two transceiver arrangements (7a, 7b) that are arranged to generate a respective radar signal (4a, 4b), and to receive reflected signals (5a, 5b) where the transmitted radar signals (4a, 4b) have been reflected by one or more objects (6). Each such group of transceiver arrangements (7a, 7b) is connected to a separate common control unit (13) via a corresponding serial link (22a, 22b). The common control unit (13) comprises a DSP (Digital Signal Processor) arrangement (12) and a control unit (32).

## Description

### DESCRIPTION OF THE DISCLOSURE

The present disclosure relates to a vehicle radar system comprising at least one group of at least two transceiver arrangements that are arranged to generate a respective radar signal.

Many vehicle radar systems comprise radar transceivers that are arranged for generating so-called chirp signals that are transmitted, reflected and received by means of appropriate antennas comprised in the radar system. A chirp signal is an FMCW (Frequency Modulated Continuous Wave) signal with a certain amplitude where the frequency is continuously ramped between two values, the chirp signal thus being in the form of a continuous sinusoid where the frequency varies from a first low frequency to a second high frequency over the course of the ramp. Alternatively the ramp may be such that the frequency varies from a first high frequency to a second low frequency. The magnitude of the change in frequency from start to finish may for example be of the order of 0.5% of the starting frequency.

The received signals, thus constituted by reflected radar echoes, are mixed with the transmitted chirp signal in order to convert the received signals to baseband signals. These baseband signals, or IF (Intermediate Frequency) signals, are amplified and transferred in a plurality of channels to an Analog Digital Converter (ADC) arrangement which is arranged to convert the received analog signals to digital signals. The digital signals are used for retrieving an azimuth angle of possible targets by simultaneously sampling and analyzing phase and amplitude of the received signals. The analysis is generally performed in one or more Digital Signal Processors / Cores (DSP:s) by means of Fast Fourier Transform (FFT) processing.

Each radar transceiver needs to be designed with regard to thermal dissipation and RF (Radio Frequency) shielding in order to cope with the heat that is generated due to high processing demands and interference problems between different parts. It is desired, however, to have a radar transceiver with alleviated demands for thermal design and internal RF shielding.

The object of the present disclosure is thus to provide a vehicle radar system with radar transceivers with alleviated demands for thermal design and internal RF shielding.

This object is achieved by means of a vehicle radar system comprising at least one group of at least two transceiver arrangements that are arranged to generate a respective radar signal, and to receive reflected signals where the transmitted radar signals have been reflected by one or more objects. Each such group of transceiver arrangements is connected to a separate common control unit via a corresponding serial link. The common control unit comprises a DSP (Digital Signal Processor) arrangement and a control unit.

According to an example, each serial link is in the form of a shielded twisted pair or a coaxial cable.

According to another example, the common control unit is in the form of an RCU (Radar Control Unit) or ADAS (Advanced Driver Assistance Systems) ECU (Electronic Control Unit). According to another example, each radar signal is in the form of an FMCW (Frequency Modulated Continuous Wave) chirp signal where each chirp signal comprises a corresponding plurality of frequency ramps, and where each frequency ramp runs between a first frequency and a second frequency.

Other examples are disclosed in the dependent claims.

A number of advantages are obtained by means of the present disclosure. Mainly, radar transceivers are provided having alleviated demands for thermal design and internal RF shielding.

Furthermore, by means of the present disclosure it is possible to have only one common control unit for a plurality of transceiver units, where the latency time between data fusion of different transceiver units are significantly reduced. Control unit improvements, for example regarding SOC (System-On-Chip), can easily be adopted by redesign only an RCU instead of complete transceiver units.

Manufacturing tolerances of each transceiver arrangement are stored in a non-volatile memory with in each transceiver arrangement and can be read out by the common control unit during e.g. start-up phase of the system.

No intern RF shielding is required and power dissipation is reduced such that no special thermal design is required. This also allows reduction of the mechanical dimensions of the transceiver arrangements which is limited by the ability to radiate heat.

### BRIEF DESCRIPTION OF THE DRAWINGS

The present disclosure will now be described more in detail with reference to the appended drawings, where:
- Figure 1: shows a schematic top view of a vehicle;
- Figure 2: shows a simplified schematic of a vehicle radar system; and
- Figure 3: shows an example of an FMCW chirp signal.

### DETAILED DESCRIPTION

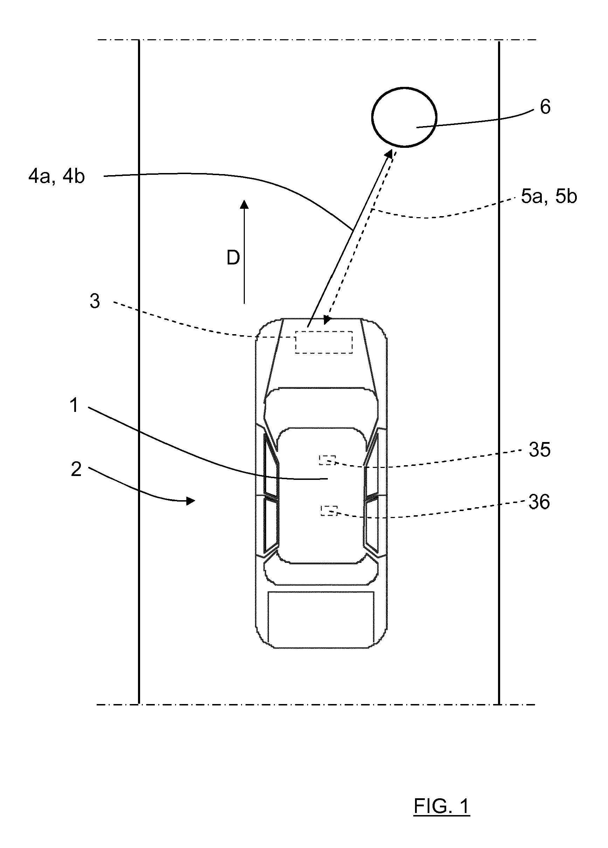

Figure 1 schematically shows a top view of a vehicle 1 arranged to run on a road 2 in a direction D, where the vehicle 1 comprises a vehicle radar system 3 which is arranged to distinguish and/or resolve single targets from the surroundings by transmitting signals 4a, 4b and receiving reflected signals 5a, 5b and using a Doppler effect in a previously well-known manner. The vehicle radar system 3 is arranged to provide azimuth angles of possible objects 6 by simultaneously sampling and analyzing phase and amplitude of the received signals 5a, 5b.

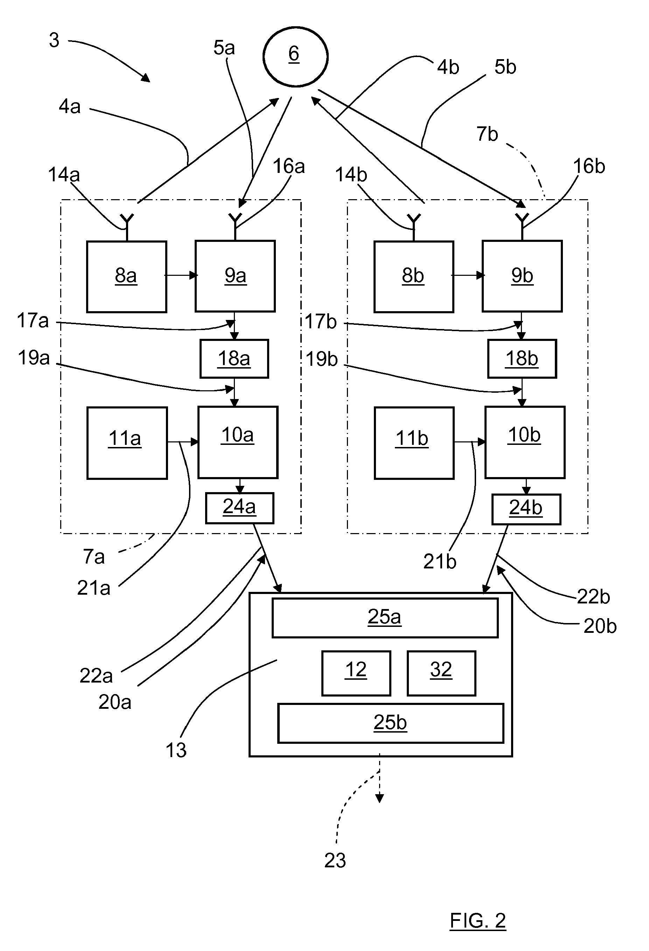

With reference also to Figure 2, the vehicle radar system 3 comprises a first transceiver arrangement 7a and a second transceiver arrangement 7b, where each transceiver arrangement 7a, 7b is arranged for generating and transmitting sweep signals in the form of FMCW (Frequency Modulated Continuous Wave) chirp signals 4a, 4b of a previously known kind, and to receive reflected signals 5a, 5b, where the transmitted chirp signals 4a, 4b have been reflected by an object 6.

The first transceiver arrangement 7a comprises a first transmitter 8a with a first transmit antenna arrangement 14a, a first receiver 9a with a first receiver antenna arrangement 16a, a first Analog to Digital Converter (ADC) arrangement 10a and a first sampling and timing arrangement 11a. Correspondingly, the second transceiver arrangement 7b comprises a second transmitter 8b with a second transmit antenna arrangement 14b, a second receiver 9b with a second receiver antenna arrangement 16b, a second Analog to Digital Converter (ADC) arrangement 10b and a second sampling and timing arrangement 11b.

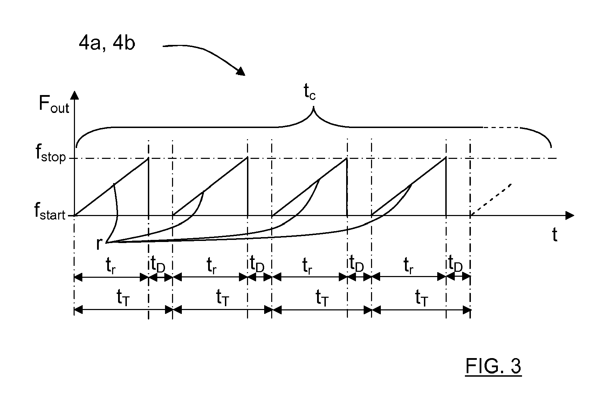

As shown in figure 3, a transmitted FMCW chirp signal 4a, 4b is in the form of a continuous sinusoid where the output frequency Fₒᵤₜ varies from a first frequency fₛₜₐᵣₜ to a second frequency fₛₜₒₚ over the course of a ramp r, where each chirp signal 4a, 4b comprises repeating cycles of a plurality of frequency ramps r. There the magnitude of the first frequency fₛₜₐᵣₜ falls below the magnitude of the second frequency fₛₜₒₚ.

A cycle for a chirp signal 4a, 4b lasts for a certain cycle time t_{c}, each ramp r lasts a certain ramp time tᵣ, having a ramp period time t_{T}. Between two consecutive ramps of the chirp signal 4a, 4b there is a delay time t_{D}.

Referring back to Figure 2, the reflected signals 5a, 5b are received by the receivers 9a, 9b via the receiver antenna arrangement 16a, 16b. The received signals 5a, 5b, thus constituted by reflected radar echoes, are then mixed with the transmitted chirp signals 4a, 4b in the receivers 9a, 9b.

In this way, IF (Intermediate Frequency) signals 17a, 17b are acquired and filtered in corresponding IF filters 18a, 18b such that filtered IF signals 19a, 19b are acquired.

The difference frequency of the filtered IF signals 19a, 19b relates to the target distance and are transferred to the corresponding ADC arrangement 10a, 10b, where the filtered IF signals 19a, 19b are sampled at a certain predetermined sampling frequency fₛ and converted to digital signals 20a, 20b, the sampling frequency fₛ being provided in the form of a sampling and timing signal 21a, 21b produced by the corresponding sampling and timing arrangement 11a, 11b.

According to the present disclosure, the first transceiver arrangement 7a and the second transceiver arrangement 7b are connected to a separate common radar control unit (RCU) 13 via a corresponding serial link 22a, 22b, where the RCU 13 comprises a DSP (Digital Signal Processor) arrangement 12 and a control unit 32. Each serial link 22a, 22b may be in the form of a shielded twisted pair or a coaxial cable, and may for example comprise an FPD-Link III Ser Des with CSI-2 interface. The RCU is shown to comprise a first bus interface 25a for communication via the serial links 22a, 22b.

In each transceiver arrangement 7a, 7b, there is a corresponding bus interface 24a, 24b. All or some parts of each transceiver arrangement 7a, 7b may be realized as one or more MMIC:s (Monolithic Microwave Integrated Circuits).

It is essential for the selected bus to provide a fast back-channel enabling the RCU 13 to control the transceiver arrangements 7a, 7b. Such a fast back-channel is suitably arranged for data speeds exceeding 1 Mbit/s. Many other types of links are of course conceivable, such as for example CAN (controller area network), CAN-FD (CAN with Flexible Data-Rate), FlexRay or Ethernet based bus systems such as BroadR-Reach.

The RCU 13 may be in the form of a so called System-On-Chip (SOC) which handles radar signal processing and vehicle data processing. The RCU is connected to other components in the vehicle 1 via a vehicle bus 23 such as a CAN bus. The RCU is shown to comprise a second bus interface 25b for communication via the vehicle bus 23. The bus interfaces 25a, 25b of the RCU 13 may be integrated into one combined bus interface.

The DSP arrangement 12 is adapted for radar signal processing by means of a first FFT (Fast Fourier Transform) to convert the digital signals 20 to a range domain, and a second FFT to combine the results from successive chirp signal ramps into the Doppler domain. This results in Range-Doppler matrices that are transferred for further processing, which is not further discussed here, many examples of such further processing being well-known in the art.

As indicated in Figure 1, the vehicle 1 comprises a safety control unit 35 and safety means 36, for example an emergency braking system and/or an alarm signal device. The safety control unit 35 is arranged to control the safety means 36 in dependence of input from the radar system 3, suitably via the vehicle bus 23.

The present disclosure is not limited to the examples above, but may vary freely within the scope of the appended claims. For example, the chirp signal ramps shown is only an example; they may for example be configured as up-ramp as described, or as down-ramps, or some combination of both. There may not be any delay time t_{D} between consecutive ramps.

The radar system may be implemented in any type of vehicle such as cars, trucks and buses as well as boats and aircraft. The schematics of vehicle radar systems are simplified, only showing parts that are considered relevant for an adequate description of the present disclosure. It is understood that the general design of radar systems of this kind is well-known in the art.

The number of antenna arrangements, antennas within each antenna arrangement and IF signals may vary.

The ADC arrangement and the DSP arrangement should each one be interpreted as having a corresponding ADC or DSP functionality, and may each be constituted by a plurality of separate components. Alternatively, each ADC arrangement may be comprised in one ADC chip, and each DSP arrangement may be comprised in one DSP chip.

Each antenna arrangement 14a, 14b; 16a, 16b may for example comprise on or more antennas, and each antenna may be constituted by one antenna element or by an array of antenna elements.

There may be any suitable number of transceiver arrangements where all are connected to a common RCU. Alternatively, groups of transceiver arrangements may be connected to different respective common RCU:s.

The RCU is generally in the form of a common control unit 13 that for example may be in the form of a radar control unit, or an ADAS (Advanced Driver Assistance Systems) ECU (Electronic Control Unit).

Such a common control unit 13 may have different contents, but is generally arranged for digital signal processing of radar raw data received from the transceiver arrangements or other sensor types such as LIDAR (Light Detection and Ranging) and Cameras (Mono or Stereo). The received data of the sensor elements will be de-serialized by single or multiple input de-serializers. The data link to the SOC / DSP inputs stages may be use a CSI-2 interface. Other state of the art chip level bus interfaces are possible as well and depending on the implementation.

The transceiver arrangements 7a, 7b have been described to generate and transmit a respective FMCW chirp signal 4a, 4b. Other kinds of FMCW signals and FMCW signal configurations are also conceivable, as well as other types of Doppler radar signals. Pulse radar, FSK (frequency-shift keying) or CW (continuous wave) waveform are also conceivable, like all other kinds of suitable modulation techniques. Generally, the transceiver arrangements 7a, 7b are arranged to generate and transmit a least two radar signals 4a, 4b.

The transceiver arrangements 7a, 7b may also be referred to as so-called radar front ends (RFE:s).

Generally, the present disclosure relates to a vehicle radar system 3 comprising at least one group of at least two transceiver arrangements 7a, 7b that are arranged to generate a respective radar signal 4a, 4b, and to receive reflected signals 5a, 5b where the transmitted radar signals 4a, 4b have been reflected by one or more objects 6. Each such group of transceiver arrangements 7a, 7b is connected to a separate common control unit 13 via a corresponding serial link 22a, 22b, where the common control unit 13 comprises a DSP (Digital Signal Processor) arrangement 12 and a control unit 32.

According to an example, each serial link 22a, 22b is in the form of a shielded twisted pair or a coaxial cable.

According to an example, each serial link 22a, 22b comprises an FPD-Link III Ser Des with CSI-2 interface.

According to an example, the common control unit 13 is in the form of a System-On-Chip (SOC) or micro-controller DSP combination which is arranged to handle radar signal processing and vehicle data processing.

According to an example, the common control unit 13 is in the form of an RCU (Radar Control Unit) or ADAS (Advanced Driver Assistance Systems) ECU (Electronic Control Unit).

According to an example, the common control unit 13 is connected to other components in the vehicle 1 via a vehicle bus 23.

According to an example, each radar signal is in the form of an FMCW (Frequency Modulated Continuous Wave) chirp signal 4a, 4b where each chirp signal 4a, 4b comprises a corresponding plurality of frequency ramps r, and where each frequency ramp r runs between a first frequency fₛₜₐᵣₜ and a second frequency fₛₜₒₚ.

According to an example, the radar system 3 is arranged to provide input to a safety control unit 35 that in turn is arranged to control safety means 36, where the radar system 3, the safety control unit 35 and the safety means 36 are comprised in a vehicle 1.

## Claims

1. A vehicle radar system (3) comprising at least one group of at least two transceiver arrangements (7a, 7b) that are arranged to generate a respective radar signal (4a, 4b), and to receive reflected signals (5a, 5b) where the transmitted radar signals (4a, 4b) have been reflected by one or more objects (6), **characterized in that** each such group of transceiver arrangements (7a, 7b) is connected to a separate common control unit (13) via a corresponding serial link (22a, 22b), where the common control unit (13) comprises a DSP, Digital Signal Processor, arrangement (12) and a control unit (32).

2. The vehicle radar system (3) according to claim 1, **characterized in that** each serial link (22a, 22b) is in the form of a shielded twisted pair or a coaxial cable.

3. The vehicle radar system (3) according to any one of the claims 1 or 2, **characterized in that** each serial link (22a, 22b) comprises an FPD-Link III Ser Des with CSI-2 interface.

4. The vehicle radar system (3) according to any one of the previous claims, **characterized in that** the common control unit (13) is in the form of a System-On-Chip, SOC, or micro-controller DSP combination which is arranged to handle radar signal processing and vehicle data processing.

5. The vehicle radar system (3) according to any one of the previous claims, **characterized in that** the common control unit (13) is in the form of an RCU, Radar Control Unit, or ADAS, Advanced Driver Assistance Systems, ECU, Electronic Control Unit.

6. The vehicle radar system (3) according to any one of the previous claims, **characterized in that** the common control unit (13) is connected to other components in the vehicle (1) via a vehicle bus (23).

7. The vehicle radar system (3) according to any one of the previous claims, **characterized in that** each radar signal is in the form of an FMCW, Frequency Modulated Continuous Wave, chirp signal (4a, 4b) where each chirp signal (4a, 4b) comprises a corresponding plurality of frequency ramps (r), and where each frequency ramp (r) runs between a first frequency (fₛₜₐᵣₜ) and a second frequency (fₛₜₒₚ).

8. The vehicle radar system (3) according to any one of the previous claims, **characterized in that** the radar system (3) is arranged to provide input to a safety control unit (35) that in turn is arranged to control safety means (36), where the radar system (3), the safety control unit (35) and the safety means (36) are comprised in a vehicle (1).
